# EUROPEAN PATENT SPECIFICATION

(11) **EP 1 505 039 B1**
(45) Date of publication and mention of the grant of the patent: **23.02.2011**
(21) Application number: 04018362.6
(22) Date of filing: 03.08.2004
(51) Int. Cl.: C03B 37/014

(54) **Method of manufacturing an optical fiber preform**
Verfahren zur Herstellung einer Lichtleitfaservorform
Méthode de fabrication d'une préforme de fibre optique

(30) Priority: 08.08.2003 JP 2003290609
(43) Date of publication of application: 09.02.2005
(73) Proprietor: Sumitomo Electric Industries, Ltd., Osaka-shi, Osaka 541-0041 (JP)
(72) Inventor: Ishihara, Tomohiro, Yokohama Works of Sumitomo, Yokohama-shi, Kanagawa, (JP)
(74) Representative: HOFFMANN EITLE

(56) References cited:
- EP-A- 0 484 035
- WO-A-03/004426
- US-A- 4 915 716
- US-A- 5 558 693
- US-A1- 2002 100 295
- US-A1- 2003 110 811
- PATENT ABSTRACTS OF JAPAN vol. 1997, no. 06, 30 June 1997 (1997-06-30) & JP 09 030828 A (HITACHI CABLE LTD), 4 February 1997 (1997-02-04)
- PATENT ABSTRACTS OF JAPAN vol. 014, no. 509 (C-0776), 7 November 1990 (1990-11-07) & JP 02 212328 A (SUMITOMO ELECTRIC IND LTD), 23 August 1990 (1990-08-23)

## Description

### BACKGROUND OF THE INVENTION

### Field of the Invention

The present invention relates to a method of manufacturing an optical fiber preform.

### Description of the Background Art

A method of synthesizing a soot glass deposit body, including a core portion and cladding portion in one process, by a Vapor phase Axial Deposition (VAD) method is disclosed in Japanese Patent Application Publication No. Sho-59-78941. However, in generally practiced methods for making a glass preform, a core rod consisting of a core or a core and internal circumference part of a cladding is prepared first, and subsequently an outer peripheral part of the cladding (also, called a 'jacket' part) is formed on the core rod (see Japanese Patent Application Publication Nos. Sho-48-73522 and Sho-55-162439).

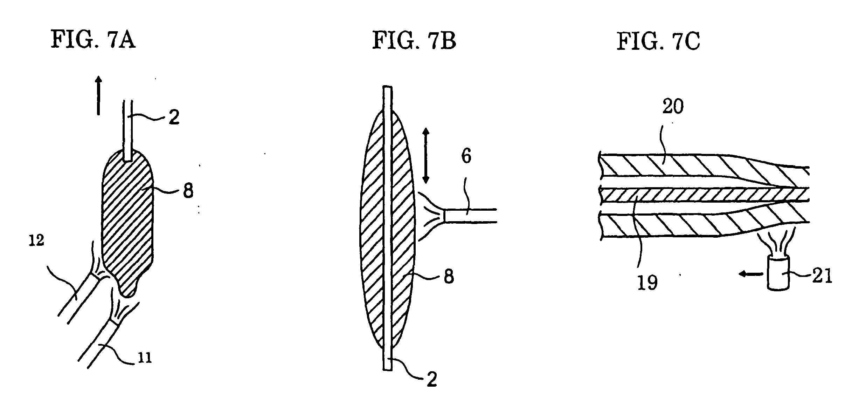

The core rod is produced, as shown in Fig. 7A or 7B, by the steps of depositing fine glass particles in an axial direction of the starting member in the case of VAD method, or in a radial direction of the starting member in the case of Outside Vapor Deposition (OVD) method, and consolidating a resultant soot glass deposit body. A jacket part is produced by the steps of forming a soot glass deposit body on the core rod by the OVD method, and consolidating it. According to this method, an optical fiber preform is produced by two steps of consolidation, that is, two consolidation processes.

In another method, an optical fiber preform is made by integrating a glass pipe 20 and a core rod 19, through a step of collapsing the glass pipe 20, which is to be processed into a jacket part, by heating it with a heat source 21 as shown in Fig. 7C. In all of these cases, in a cross-section perpendicular to the central axis of the optical fiber preform or the optical fiber, a line that is a boundary between a part originated from the core rod and a part added thereto can be observed. Such a line is referred to as a "boundary line " in this specification and the accompanying claims.

The diameter (the diameter of cladding) J of an optical fiber preform is determined according to the core diameter d and the refractive index of the core. Here, a ratio J/d is a parameter related to chromatic dispersion characteristics, and is designed to become about 10 - 16. If the core diameter is not the same as a designed value, the diameter of a cladding must be re-determined according to each core rod.

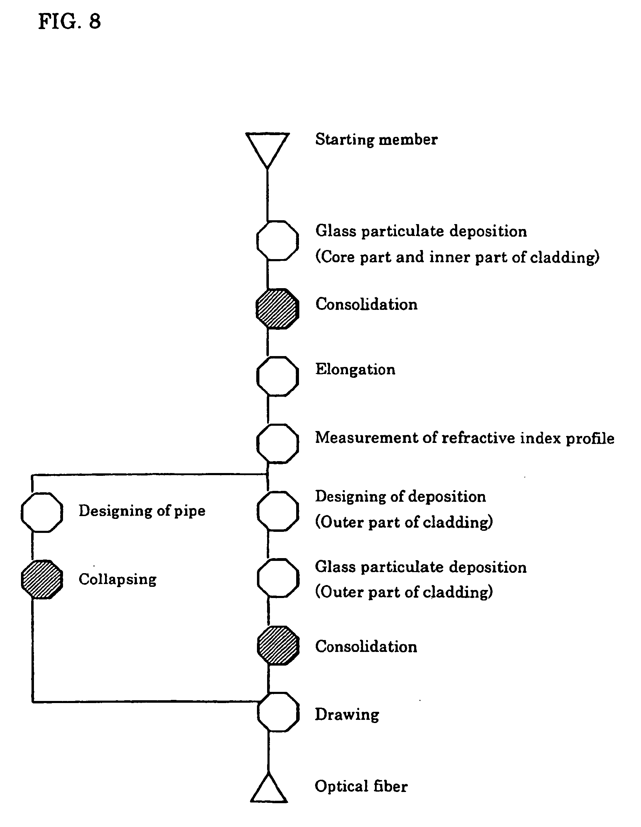

Thus, in the past, the diameter J of a cladding (hereinafter called "cladding diameter" J) was determined according to the results of measuring the core diameter d and the refractive index of the manufactured core rod, and a jacket part was formed such that the diameter of an optical fiber preform might coincide with J. The flow of a conventional manufacturing method is shown in Fig. 8. With a conventional method of manufacturing optical fiber preform by such two steps, the manufacturing cost could be reduced to some extent, since a jacket part, which accounts for much volume in the optical fiber preform, can be synthesized without paying such a strict attention as in the step of synthesizing a core portion.

US 2003/0110811 A1 discloses forming an optical fiber by performing vapor phase deposition of SiO₂ on the outside of a glass rod comprising a core section and a first cladding section and drawing a glass preform which formed by a second cladding section. Also, a single mode optical fiber is manufactured so that the ratio of the diameter D of the first cladding section and the diameter d of the core section is in a range of 4.0 to 4.8, and OH concentration is 0.1 ppm or less. Also, an optical fiber is manufactured so that a value of D/d>4.8, and the OH concentration is 0.1 ppm or less. It is thereby possible to maintain an initial loss in the 1380 nm wavelength range even if hydrogen diffusion occurs.

US 5 558 693 A discloses providing low attenuation, low dispersion of optical waveguides by a process initiating with axial deposition of a high velocity core soot stream impinging on, a target at a high angle of incidence relative to the axis of rotation of the target. A core cylinder is built up axially by relative movement between the soot stream and target during deposition, the movement being non-constant in order to maintain a substantially constant diameter with a constant deposition rate. A cladding layer is then built up by deposition of soot radially on the core. Subsequent drying and sintering provides a vitreous preform which may be-drawn directly into optical waveguides. Alternatively, the sintered product may be drawn down to smaller rods, which then are covered with further deposited soot cladding to a desired final thickness, and after further drying and sintering may be drawn to optical waveguides.

### SUMMARY OF THE INVENTION

An object of the present invention is to provide a method of manufacturing a fiber preform at lower cost and in a stable manner.

To achieve such object, a method of manufacturing an optical fiber preform according to claim 1 is provided.

Preferred embodiments of the invention are indicated in the dependent claims.

The diameter of the crude preform may be in the range of 0.95 times or more and less than 1.0 times the cladding diameter, and the step of making an optical fiber preform from the crude preform may be a process in which fine glass particles are deposited on the crude preform. The diameter of the crude preform may be more than 1.0 times and equal to or less than 1.3 times the diameter of the cladding, and the step of making an optical fiber preform from the crude preform may be a process in which the diameter of the crude preform is reduced by removing the radial peripheral portion thereof.

The optical fiber preform may have a diameter equal to or more than 110 mm, a length equal to or more than 1500 mm, and a weight equal to or more than 50 kg.

The core portion of the soot glass deposit body may be formed by the VAD method, and the cladding portion of the soot glass deposit body may be formed by depositing fine glass particles around the core portion of the soot glass deposit body, using a plurality of burners.

Yet another method is provided, which comprises a step of producing a soot glass deposit body consisting of a core portion and a cladding portion; a step of consolidating the soot glass deposit body so as to make a crude preform including a core and a cladding and having a diameter of more than 1.0 times and equal to or less than 1.3 times a cladding diameter of an optical fiber preform, the cladding diameter being to be determined by the refractive index and the diameter of the core; a step of reducing the diameter of the crude preform by removing the radial peripheral portion thereof so as to make the optical fiber preform; and a step of drawing the optical fiber preform.

In a cross-section perpendicular to the central axis of an optical fiber preform thus produced, there are no boundary lines which would be generated at positions within the distance of less than 0.95 times the radius of the optical fiber preform from the central axis if a plurality of consolidation steps were performed. At a position that is away from the central axis by a distance equal to or more than 0.95 times the radius of the optical fiber preform, it does not matter whether there are such lines or not. Also, in the cross-section perpendicular to the central axis of an optical fiber thus produced, there are no boundary lines which would be generated at positions within the distance of less than 0.95 times the radius of the optical fiber from the central axis if a plurality of consolidation steps were performed. At a position that is apart from the central axis by a distance equal to or more than 0.95 times the radius of the optical fiber, it does not matter whether there are such lines or not.

Advantages of the present invention will become readily apparent from the following detailed description, which illustrates the best mode contemplated for carrying out the invention. The invention may be implemented according to other and different embodiments, the details of which may be modified in various obvious respects, all without departing from the scope of the invention. Accordingly, the drawing and description are illustrative in nature, not restrictive.

### BRIEF DESCRIPTION OF THE DRAWINGS

The present invention is illustrated by way of example, and not by way of limitation, in the figures of the accompanying drawings in which like reference numerals refer to similar elements.
Figure 1 is a flow chart showing methods of manufacturing an optical fiber preform according to one embodiment of the present invention.
Figure 2 is a schematic diagram showing a method (VAD method) of manufacturing an optical fiber preform according to one embodiment of the present invention.
Figure 3 is a schematic diagram showing a method (OVD method) of manufacturing an optical fiber preform according to another embodiment of the present invention.
Figure 4 is a schematic diagram showing a method (MMD method) of manufacturing an optical fiber preform according to another embodiment of the present invention.
Figure 5 is a schematic diagram showing a method (a combination of the VAD method and the MMD method) of manufacturing an optical fiber preform according to one embodiment of the present invention.
Figure 6 is a schematic diagram showing a method (a combination of the OVD method and the MMD method) of manufacturing an optical fiber preform according to one embodiment of the present invention.
Figures 7A to 7C are schematic diagrams showing the VAD method, the OVD method, and the rod in collapsing method, respectively.
Figure 8 is a flow chart showing a conventional method of manufacturing an optical fiber preform.

### DETAILED DESCRIPTION OF THE INVENTION

According to an embodiment of the present invention, first a soot glass deposit that is equivalent to the whole core (the core portion of a soot glass deposit body) and subsequently a soot glass deposit that is substantially equivalent to the whole cladding (the cladding portion of the soot glass deposit body) are synthesized beforehand, and the soot glass deposit body consisting of the core portion and cladding portion is consolidated so as to become a crude preform. The core diameter d and the refractive index of the core of the crude preform thus obtained and the diameter D of the crude preform are measured, and a needed cladding diameter J of the optical fiber preform is determined according to the measurement of the refractive index of the core and the core diameter d, and adjustment is done such that the diameter D becomes equal to the diameter J.

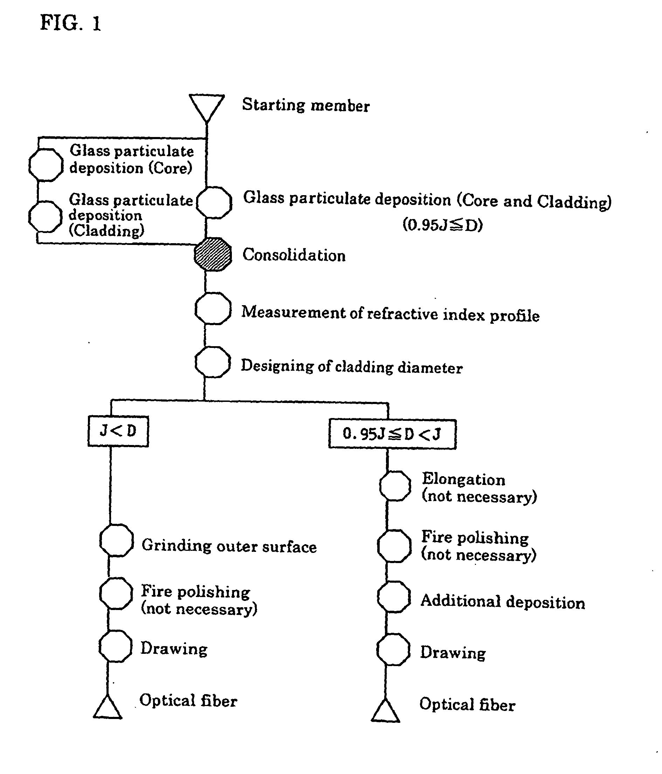

Figure 1 is a flow chart showing methods of manufacturing an optical fiber preform according to one embodiment of the present invention.

First, a soot glass deposit body consisting of a core portion and a cladding portion is synthesized. That is, a soot glass deposit body is produced such that the diameter D of a crude preform, which is made by consolidating the soot glass deposit body, satisfies the expression 0.95 J ≤ D (whereas, D ≠ J) relative to the cladding diameter J of an optical fiber preform, the cladding diameter J being determined by the diameter and the refractive index of the core of the crude preform. Preferably, the soot glass deposit body is manufactured so as to satisfy 0.95J ≤ D < J, or J < D ≤ 1.3J.

Synthesizing a soot glass deposit body such that the diameter D of the crude preform to satisfy 0.95J ≤ D (whereas, D ≠ J) means producing the whole or most of glass constituting an optical fiber by one consolidation step, and it can substantially reduce a manufacturing cost as compared with a conventional method in which consolidation steps are repeated.

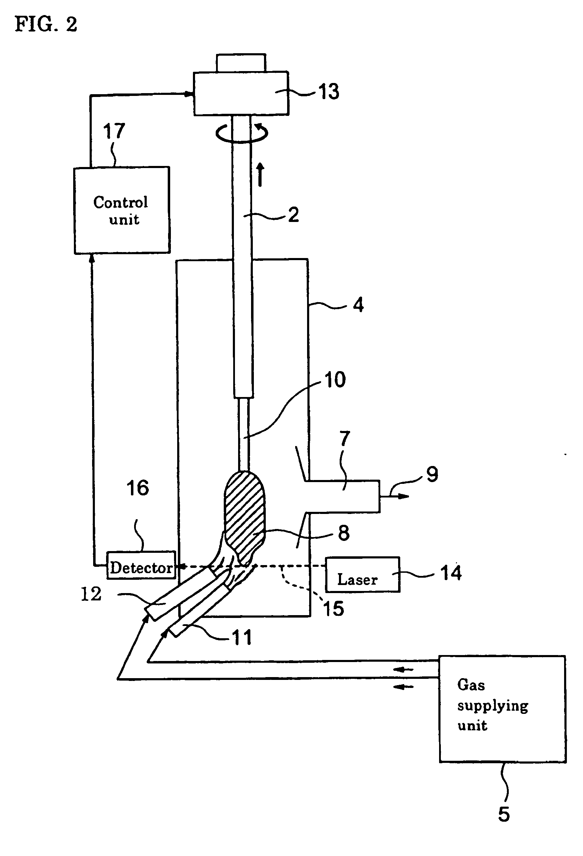

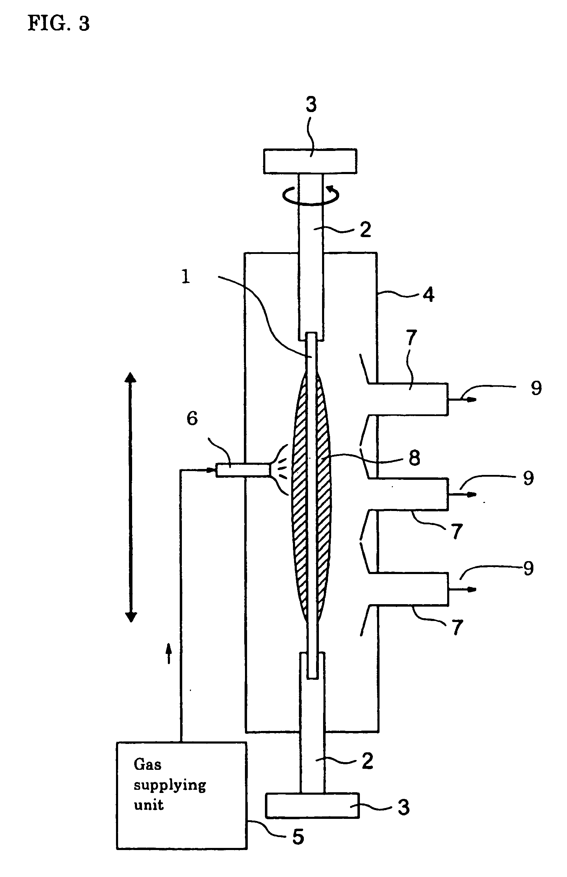

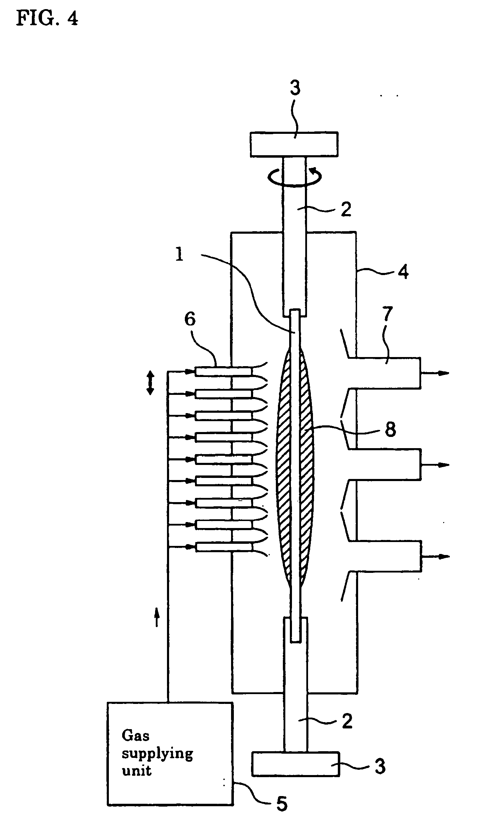

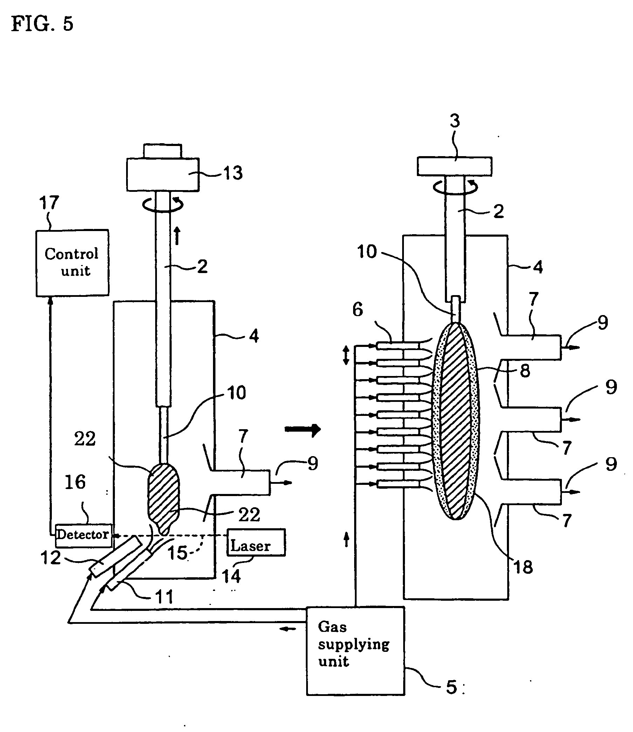

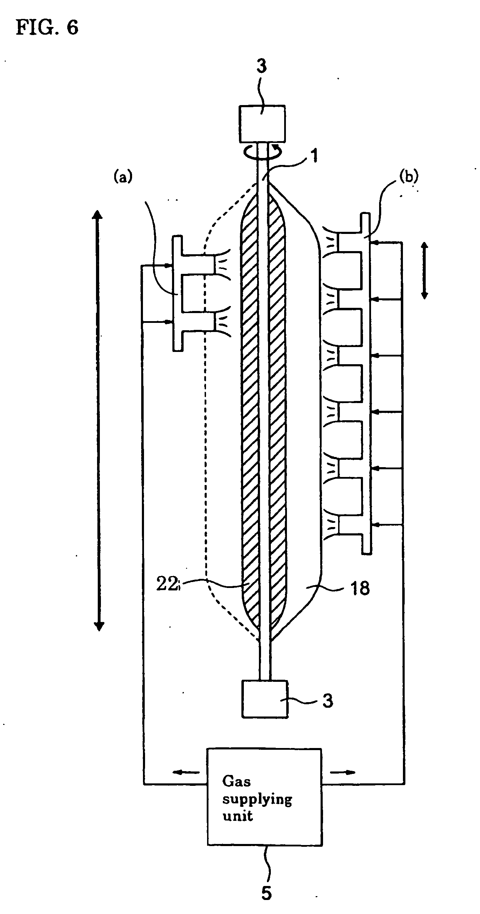

The synthesis of the soot glass deposit body can be done using a known means for deposition of fine glass particles: for example, the VAD method shown in Fig. 2, the OVD method shown in Fig. 3, the Multi-burner Multi-layer Deposition (MMD) method shown in Fig. 4. Moreover, it is possible to use two or more methods as needed in combination of the VAD method, the OVD method, or the MMD method as shown in Figs. 5 and 6.

Figure 2 is a schematic diagram showing a method (the VAD method) according to one embodiment of the present invention for manufacturing an optical fiber preform. For synthesizing a soot glass deposit body by the VAD method, a plurality of burners for synthesis of fine glass particles (in Fig. 2, a burner 11 for the synthesis of a core portion and a burner 12 for the synthesis of a cladding portion) are used. A glass material gas (e.g., silicon tetrachloride (SiCl₄)), carrier gas (e.g., argon helium), combustible gas (e.g., hydrogen (H₂), hydrocarbon), and combustion-aiding gas (oxygen (O₂)) are introduced from a gas supplying unit 5 into each of burners 11, 12 for synthesis. Furthermore, a dopant raw material gas for adjustment of refractive index (e.g., germanium tetrachloride (GeCl₄)) is introduced into burner 11. Fine glass particles formed in a flame of each of burners 11 and 12 are deposited on a starting member 10 fixed to a supporting rod 2, accumulating on the starting member so as to grow in an axial direction thereof so that a soot glass deposit body 8 having a core portion and a cladding portion is produced. The lifting speed of a lifter 13 is controlled through a lifting speed control unit 17 by means of laser light 15 emitted from a laser oscillator 14 and received at a detector 16 such that the amount of the light interrupted by the tip of the soot glass deposit body 8 becomes constant. Numeral 4 represents a reaction container, 7 represents an exhaust pipe, and 9 represents an exhaust.

Figure 3 is a schematic diagram showing a method (the OVD method) according to another embodiment of the present invention for manufacturing an optical fiber preform.

In the case of the OVD method, fine glass particles formed in a flame of a burner 6 which moves in a reciprocating manner relative to a starting member 1 are deposited in a radial direction on the starting member 1 fixed to a supporting rod 2 so that a soot glass deposit body 8 is synthesized. A core portion having a refractive index profile can be formed by adding a dopant raw material gas for adjustment of refractive index to a glass material gas. After the core portion has been formed and after a soot glass deposit body is formed with respect to most of a cladding portion or more than the size of the cladding portion, a glass rod starting member 1 is pulled out and consolidation is performed, whereby a glass rod having a core and a cladding can be produced. Numeral 3 indicates a traverser. In the OVD method, it is possible to increase the deposition speed by using a plurality of burners.

Figure 4 is a schematic diagram showing a method (the MMD method) of manufacturing an optical fiber preform according to another embodiment of the present invention. The MMD method, which is based on an application of the OVD method, is a method where a number of burners 6 for synthesizing fine glass particles are arranged such that a substantially full length of a preform to be produced can be covered, and fine glass particles are deposited at high speed so as to grow in a radial direction of a starting member 1. In the MMD method, each burner moves in a reciprocating manner relative to the starting member for a length corresponding to an interval between adjacent burners. Because the deposition speed for producing a soot glass deposit body 8 is greater in the MMD method than in the VAD method or the OVD method, the MMD method is suitable for the synthesis of a cladding portion which accounts for most part of a preform to be produced.

The VAD method may be used for fabricating the whole of a soot glass deposit body, but it is lower cost to use the VAD method for producing a core portion only, or the core portion and a part of a cladding portion, and to use the OVD method or the MMD method for producing a major part of the cladding portion. If at least a core portion is produced by the VAD method, the collapsing process is unnecessary, unlike the case in which the core portion is made by the OVD method, because a soot glass deposit body having a solid body is produced.

One of the reason for producing a part of the cladding portion simultaneously with the core portion is that the cladding portion which is in contact with the core portion must be synthesized precisely like the core portion because it relates to transmission characteristics of an optical fiber made therefrom. Another reason is that it is effective for preventing the core portion from being contaminated when moved to another equipment for synthesizing the most part of the cladding portion by another method, the MMD method, for example.

If a core portion is fabricated by the OVD method, the process of pulling out a starting member and collapsing is necessary, but it is advantageous from the viewpoint of deposition speed. The process of pulling out a starting member and collapsing is necessary also in the case where the whole soot glass deposit body is synthesized by the OVD method or the MMD method only. The starting member may be pulled out either before or after a soot glass deposit body is consolidated.

It is preferable from the view point of the manufacturing cost and the deposition speed to synthesize the soot glass deposit body for the cladding portion on the soot glass deposit body which includes a core portion, by the OVD method or the MMD method using a plurality of burners. Also, it is preferable from the viewpoint of ease in adjusting the ratio of J/d to a designed value that a core portion be precisely synthesized beforehand by the VAD method or the OVD method so as to have a uniform core diameter, and thereafter a cladding region be synthesized at high speed by the MMD method.

Subsequently, the core diameter d, the refractive index of the core, and the diameter D of a crude preform thus obtained are measured, and the cladding diameter J that is needed for the optical fiber preform is determined according to the refractive index and the core diameter d, and the diameter D of the crude preform is adjusted so as to coincide with the cladding diameter J of the optical fiber preform. Thus, an optical fiber preform is produced.

The method of determining the cladding diameter J of the optical fiber preform according to the refractive index of the core and the diameter d of the core is as follows. First, using a finite element method from the refractive index profile of the core thus obtained, a core diameter that may be suitable for target values of a cutoff wavelength and Mode field diameter (MFD) after being processed into a fiber is calculated. Although a calculation result changes depending on the refractive index profile of interface between the core and the cladding, if the average refractive index of the core portion is 0.367 % and the target cutoff wavelength is 1.220 µm, for example, the target fiber core diameter is 7.63 µm. Because the cladding diameter of the fiber is 125 µm, the ratio J/d becomes 125/7.63.

Because the ratio e/f between the diameter e of a soot glass deposit body and the diameter f of an optical fiber preform produced therefrom by consolidation can be empirically found (the bulk density b of the soot glass deposit body is substantially constant), the value obtained by multiplying the ratio e/f by the diameter J of the optical fiber preform becomes the diameter of the soot glass deposit body to be produced.

The step for making an optical fiber preform from a crude preform in a manner such that the diameter D of the crude preform and the diameter J of the optical fiber preform have the relationship of 0.95J ≤ D < J may be a process in which fine glass particles are deposited on the crude preform. In this case, the crude preform on which fine glass particles have been deposited may, in a state as it is, be drawn into an optical fiber. The fine glass particles that have been put onto the glass preform by a small quantity are consolidated within a drawing furnace at the upper part thereof, in which the temperature is slightly lower than the central part thereof, and drawing can be done immediately thereafter. This method is possible if a crude preform has a diameter D which satisfies the relationship of 0.95J ≤ D < J. In the case of D < 0.95J, it is difficult to deposit fine glass particles on a crude preform and to perform drawing immediately in a state as it is.

As compared with a conventional method, the method in which fine glass particles are deposited on a crude preform is effective for reducing a manufacturing cost because it needs the consolidation process only once, although the cost reduction effect is less because of the additional process of depositing fine glass particles. However, the cost reduction effect is significant in the case of a large-sized preform: for example, if the consolidation process is needed only once for an optical fiber preform that has a weight equal to or more than 50 kg, or a length of 1500 mm or more and a diameter of 110 mm or more.

The process for making an optical fiber preform from a crude preform in a manner such that the diameter D of the crude preform and the diameter J of the optical fiber preform have the relationship of J < D ≤ 1.3J may be a process in which the diameter of the crude preform is reduced by removing the radial peripheral portion thereof. In this case, the optical fiber preform thus produced is drawn into an optical fiber. Reducing the diameter of a crude preform is easier than performing an additional deposition. If the diameter D of the crude preform is 1.3J or less, it is advantageous in terms of manufacturing cost, because the volume to be reduced is less than the volume of the optical fiber preform to be left. The means for such reducing includes honing, mechanical grinding processing, and wet etching, for example.

As described so far, according to one embodiment of the present invention, since a crude preform having an outer diameter D that satisfies 0.95J ≤ D (where, D ≠ J) is produced by consolidating a soot glass deposit body having a core portion and a cladding portion, the significant effect of cost-reduction in terms of equipment, manufacturing time, and human expenses can be achieved with respect to an optical fiber preform and optical fiber obtained therefrom. The present invention allows the manufacturing cost to be reduced by approximately 10 percent or more as compared with the manufacturing cost of a conventional method in which two or more consolidation steps are performed. Thus, it is useful particularly where the reduction of the manufacturing cost of optical fibers is demanded in view of price competition in the optical fiber market in recent years. In addition, optical fibers produced according to the present invention can be stabilized in terms of transmission characteristics.

One of the preferable embodiments of the present invention is that while fine glass particles are being deposited for a core portion, the temperature of the core portion is measured. That is, the relationship between the temperature and a core diameter d or refractive index is determined beforehand so that the core diameter d and refractive index can be detected by measuring the temperature during deposition of fine glass particles. Then, if there is a variation in the diameter d of the core or the refractive index, the diameter of the cladding portion of a soot glass deposit body to be fabricated later can be changed according to the variation so that the quantity of correction to be made with respect to the outer diameter of a crude preform may decrease. If the ratio D/d of an obtained crude preform is not uniform throughout the whole length of the preform, it is possible to uniform the ratio J/d by correcting the diameter of the crude preform.

Preferably, an optical fiber preform has a diameter of 110 mm or more, and a length of 1500 mm or more. The weight of the optical fiber preform is preferably equal to or more than 50 kg. This is because more effective reduction in the manufacturing cost is expected in the case of such a large-sized optical fiber preform from which a longer optical fiber can be produced.

An optical fiber is fabricated by heating and drawing either an optical fiber preform thus obtained or a crude preform on which fine glass particles are deposited additionally.

In the case of an optical fiber preform produced in a manner such that a soot glass deposit body that becomes a central portion is consolidated first and subsequently fine glass particles are deposited thereon and consolidated so as to be an outer portion, a boundary line between the central portion and the outer portion can be recognized when a cross section perpendicular to the axis of an optical fiber preform or an optical fiber is observed with a scan-type electron microscope (SEM). The number of such boundary lines indicates the number of consolidation steps performed. In the case of an optical fiber preform or an optical fiber produced according to a method of the present invention, a boundary line can be recognized only in a region distanced from the center by a distance equal to or more than 0.95 times the radius of the optical fiber preform or the optical fiber, and there are no boundary lines existing inside of the region.

In the case where a crude preform is produced in a manner such that J<D is satisfied and thereafter the outer periphery of the crude preform is subjected to grinding, an optical fiber preform or an optical fiber made therefrom has no lines that appear in the case where two or more consolidation processes have been done. On the other hand, in the case where an optical fiber preform or an optical fiber is fabricated by conventional consolidation of two steps, a boundary line is recognized at a region distanced from the center by a distance of 3 - 4 times the core radius (at a region distanced by a distance less than 0.95 times the radius of the optical fiber).

In a preform according to the present invention, the ratio J/d falls within an allowable range in the longitudinal direction of the preform substantially over the full length. Therefore, it is possible to attain a satisfactory yield of optical fibers in terms of characteristics (i.e., the rate at which the characteristics of an optical fiber, such as MFD, cutoff wavelength, chromatic dispersion, zero dispersion wavelength, and chromatic dispersion slope falls within a target range). Even in the case where the diameter of a crude preform is modified as in an embodiment of the present invention, it is advantageous to limit to one consolidation process, because it is not unusual that the yield of optical fibers in terms of characteristics falling within a target range is not more than 70 % since the diameter of core or cladding tends to change longitudinally in the preform even if it is attempted to synthesize a soot glass deposit body so as to achieve J=D.

The efficiency of producing a crude preform can be improved if a soot glass deposit body is produced according to the present invention with a single unit of equipment that is suitable for two or more kinds of manufacturing methods, such as the OVD method and the MMD method, as shown in Fig. 6. This is because in the case of synthesizing a soot glass deposit body with a single apparatus, time for arrangement otherwise needed for each apparatus in the case of a plurality of apparatus is unnecessary.

As shown in the flow chart of Fig. 1, in an implementation of the present invention, known methods can be adopted for improving the transmission characteristics of an optical fiber, such as elongation of a transparent glass body, fire polishing, and dehydration processing in a consolidation process, and so on. The fire polishing and the dehydration processing are effective for removing foreign substances and moisture.

### Example 1

An example of producing an optical fiber preform having a core diameter of 15 mm and a cladding diameter of 114.5 mm is described below.

The deposition of fine glass particles is performed by using a construction as shown in Fig. 6. A pure silica glass rod having a diameter of 10 mm and a length of 2400 mm is used as a starting member 1, and first, a core portion 22 which becomes the center of an optical fiber is synthesized by the OVD method. More specifically, fine glass particles consisting of silicon oxide (SiO₂) and germanium oxide are deposited with a bulk density of 0.4g/cm³ on a starting member while moving a burner group (a) consisting of two burners over the full length thereof in a reciprocating motion at a speed of approximately 500 mm/minute for synthesizing the core portion. Thus, when the core portion is formed to have a diameter of 30.9 mm, the supply of gas to the burners for the core synthesis is stopped, and H₂ and O₂ in an increased amount than in the case of the burner group (a) for the core synthesis are supplied together with SiCl₄ to each burner in a burner group (b) for synthesizing a cladding portion. At the same time, the burner group (b) for the synthesis of cladding portion is moved in a reciprocating motion for a distance corresponding to each burner interval so as to deposit fine glass particles consisting of SiO₂ for the cladding portion 18 with a bulk density 0.4g/cm³.

Fine glass particles are to be deposited until a soot glass deposit body has a diameter of 223.4 mm in terms of design, but in this example fine glass particles are deposited until the diameter becomes 247 mm. That is, fine glass particles are deposited to the extent of 1.1 times relative to the designed diameter of the soot glass deposit body. After the deposition is completed, the starting member 1 is pulled out from the soot glass deposit body, and dehydration, consolidation, and collapsing are performed so as to make a crude preform. The effective portion of the crude preform has a diameter of 125 mm and a length of 2200 mm.

The core diameter and the refractive index of the core of a crude preform thus prepared are measured at a plurality of positions in the longitudinal direction and the fiber characteristics are estimated in order to determine a necessary cladding diameter of an optical fiber preform. In the case of an optical fiber preform whose relative refractive index difference of the core is 0.367 % and whose core diameter is 15 mm, the diameter of 114.5 mm is required.

Subsequently, an optical fiber preform is made by grinding a crude preform having a diameter of 125 mm to an optical fiber preform having a diameter of 114.5 mm, which is the size that allows an optical fiber of 2200 km length to be produced therefrom. Thereafter, the optical fiber preform is drawn into an optical fiber. When the optical fiber thus produced is observed through a SEM, there is no boundary line in the cladding region. The manufacturing cost of this optical fiber preform per fiber unit length is 0.71 times that of an optical fiber preform of Comparative Example 1.

### Examples 2 to 6 and Comparative examples 1 to 7

Moreover, optical fiber preforms and optical fibers are produced in various manners, changing the ratio D/J between the diameter of a crude preform and the diameter of an optical fiber preform, the number of equipment for fabricating soot glass deposit bodies, and methods of synthesizing glass. Table I shows the converted fiber length (i.e., the respective length of optical fibers that can be produced from these optical fiber preforms) and manufacturing cost of these optical fiber preforms per unit fiber length in comparison with the standard of Comparative Example 1 that is referenced as 1. In Table I, the term "additional glass synthesis" means that fine glass particles are deposited on a crude preform. The term "outer peripheral grinding" means a process in which the circumferential periphery of a crude preform is ground, typically by honing.

**Table I**

| No. | Ratio D/J | Number of equipment | Methods | Additional glass synthesis | Outer peripheral grinding | Converted fiber length | Manufacturing cost |
|---|---|---|---|---|---|---|---|
| Ex.1 | 1.1 | 1 | OVD +MMD | None | Existing | 2,222 | 0.71 |
| Ex.2 | 1.3 | 1 | VAD +MMD | None | Existing | 2,222 | 0.90 |
| Ex.3 | 1.1 | 2 | OVD +MMD | None | Existing | 2,222 | 0.81 |
| Ex.4 | 0.95 | 1 | OVD +MMD | MMD | None | 2,222 | 0.88 |
| Ex.5 | 1.1 | 1 | OVD +MMD | None | Existing | 1,852 | 0.76 |
| Ex.6 | 1.1 | 1 | OVD +MMD | None | Existing | 1,482 | 0.88 |
| Comparative Ex. 1 | 0.25 | 2 | OVD +MMD | MMD | None | 2,222 | 1.00 |
| Comparative Ex. 2 | 0.45 | 2 | OVD +MMD | MMD | None | 2,222 | 1.26 |
| Comparative Ex. | 1.55 | 1 | OVD +MMD | None | Existing | 2,222 | 1.50 |
| Comparative Ex. 4 | 1.65 | 1 | OVD +MMD | None | Existing | 2,222 | 1.69 |
| Comparative 5 Ex. | 1.5 | 1 | OVD +MMD | None | Existing | 2,222 | 1.39 |
| Comparative Ex. 6 | 0.5 | 1 | OVD +MMD | MMD | None | 2,222 | 1.19 |
| Comparative Ex. 7 | 0.8 | 1 | OVD +MMD | MMD | None | 2,222 | 1.64 |

The manufacturing cost of an optical fiber preform in terms of per unit length of an optical fiber produced from the preform can be reduced by making the ratio D/J to fall in the range of 0.95 to 1.3, and by accordingly modifying the diameter of the crude preform so as to obtain an optical fiber preform. The converted fiber length of the optical fiber preforms thus obtained differs among Examples 1, 5, and 6 as shown in Table I, and the shorter the converted fiber length, the higher the manufacturing cost.

In the case of Comparative Examples 1 and 2 in which a core rod is prepared and a soot glass deposit body is synthesized on it and consolidation is performed twice, the manufacturing cost is higher than that in the examples of the present invention. As for the optical fiber preform and the optical fiber in Comparative Examples 1 and 2, a boundary line layer can be seen in the cladding region thereof when a section perpendicular to the axes thereof is observed.

In Comparative Examples 3 to 5 in which the deposition of fine glass particles is done so as to achieve D>1.3 J, the effect of manufacturing cost reduction cannot be obtained. In Comparative Examples 6 an 7 in which only one unit of equipment is used and the second deposition of fine glass particles is performed with the same equipment after consolidation has been done once, the manufacturing cost is larger than the examples of the present invention.

While this invention has been described in connection with what is presently considered to be the most practical and preferred embodiments, the invention is not limited to the disclosed embodiments and examples, but on the contrary, is intended to cover various modifications and equivalent arrangements included within the scope of the invention.

## Claims

1. A method of manufacturing an optical fiber preform, comprising the steps of:
producing a first soot glass deposit body consisting of a core portion or of a core portion and a part of a cladding portion;
depositing glass soot on the first soot glass deposit body to produce a soot glass deposit body (8) consisting of the core portion (22) and a cladding portion (18);
consolidating the soot glass deposit body (8) so as to make a crude preform having a diameter equal to or more than 0.95 times the cladding diameter of the optical fiber preform, the cladding diameter being determined by the refractive index and the diameter of the core; and
modifying the diameter of the crude preform so as to coincide with the cladding diameter of the optical fiber preform.

2. A method of manufacturing an optical fiber preform according to claim 1, wherein the diameter of the crude preform is in the range of 0.95 times or more and less than 1.0 times the cladding diameter, and the step of making an optical fiber preform from the crude preform is a process in which fine glass particles are deposited on the crude preform.

3. A method of manufacturing an optical fiber preform according to claim 1, wherein the diameter of the crude preform is more than 1.0 times and equal to or less than 1.3 times the diameter of the cladding; and the step of making an optical fiber preform from the crude preform is a process in which the diameter of the crude preform is reduced by removing the radial peripheral portion thereof.

4. A method of manufacturing an optical fiber preform according to any one of claims 1 to 3, wherein the optical fiber preform has a diameter equal to or more than 110 mm, and a length equal to or more than 1500 mm.

5. A method of manufacturing an optical fiber preform according to any one of claims 1 to 4, wherein the optical fiber preform has a weight equal to or more than 50 kg.

6. A method of manufacturing an optical fiber preform according to any one of claims 1 to 5, wherein the first soot glass deposit body is formed by depositing fine glass particles in an axial direction thereof, and the soot glass deposit body (8) is formed by depositing fine glass particles by the outside vapor deposition method or the multi-burner multi-layer deposition method.

## Patentansprüche

1. Verfahren zur Herstellung einer Glasfaservorform, das die Schritte umfasst:
Herstellen eines Rußglasablagerungskörpers, der aus einem Kernabschnitt oder aus einem Kernabschnitt und einem Teil eines Mantelabschnitts besteht;
Ablagern von Glasruß auf den ersten Rußglasablagerungskörper, um einen Rußglasablagerungskörper (8) herzustellen, der aus dem Kernabschnitt (22) und einem Mantelabschnitt (18) besteht;
Konsolidieren des Rußglasablagerungskörpers (8), um eine unfertige Vorform herzustellen, welche einen Durchmesser aufweist, der gleich oder größer als das 0,95-fache des Manteldurchmessers der Glasfaservorform ist, wobei der Manteldurchmesser durch den Brechungsindex und den Durchmesser des Kerns bestimmt wird; und
Modifizieren des Durchmessers der unfertigen Vorform, um mit dem Manteldurchmesser der Glasfaservorform übereinzustimmen.

2. Verfahren zur Herstellung einer Glasfaservorform nach Anspruch 1, bei dem der Durchmesser der unfertigen Vorform gleich oder größer als das 0,95-fache und kleiner als das 1,0-fache des Manteldurchmessers ist und der Schritt zur Herstellung einer Glasfaservorform aus der unfertigen Vorform ein Verfahren ist, in dem feine Glaspartikel auf der unfertigen Vorform abgelagert werden.

3. Verfahren zur Herstellung einer Glasfaservorform nach Anspruch 1, bei dem der Durchmesser der unfertigen Vorform größer als das 1,0-fache und gleich oder kleiner als das 1,3-fache des Manteldurchmessers ist und der Schritt zur Herstellung einer Glasfaservorform aus der unfertigen Vorform ein Verfahren ist, in dem der Durchmesser der unfertigen Vorform durch Entfernen des radialen Umfangsabschnitts davon verringert wird.

4. Verfahren zur Herstellung einer Glasfaservorform nach einem der Ansprüche 1 bis 3, bei dem die Glasfaservorform einen Durchmesser, der gleich oder größer als 110 mm ist, und eine Länge aufweist, die gleich oder größer als 1.500 mm ist.

5. Verfahren zur Herstellung einer Glasfaservorform nach einem der Ansprüche 1 bis 4, bei die Glasfaservorform ein Gewicht aufweist, das gleich oder größer als 50 kg ist.

6. Verfahren zur Herstellung einer Glasfaservorform nach einem der Ansprüche 1 bis 5, bei dem der erste Rußglasablagerungskörper durch Ablagern von feinen Glaspartikel in einer axialen Richtung davon ausgebildet wird, und der Rußglasablagerungskörper (8) durch Ablagern von feinen Glaspartikeln mittels des Außendampfablagerungsverfahrens oder des Multibrenner-, Multischichtablagerungsverfahrens ausgebildet wird.

## Revendications

1. Procédé de fabrication d'une préforme de fibre optique, comprenant les étapes consistant à :
produire un premier corps de dépôt de suie de verre consistant en une portion de coeur ou en une portion de coeur et une partie d'une portion de plaquage;
déposer de la suie de verre sur le premier corps de dépôt de suie de verre pour produire un corps de dépôt de suie de verre (8) consistant en la portion de coeur (22) et une portion de plaquage (18) ;
consolider le corps de dépôt de suie de verre (8) de façon à fabriquer une préforme brute ayant un diamètre supérieur ou égal à 0,95 fois le diamètre de plaquage de la préforme de fibre optique, le diamètre de plaquage étant déterminé par l'indice de réfraction et le diamètre du coeur ; et
modifier le diamètre de la préforme brute de façon à ce qu'il coïncide avec le diamètre de plaquage de la préforme de fibre optique.

2. Procédé de fabrication d'une préforme de fibre optique selon la revendication 1, dans lequel le diamètre de la préforme brute est dans la plage de 0,95 fois ou plus et moins de 1,0 fois le diamètre de plaquage, et l'étape de fabrication d'une préforme de fibre optique à partir de la préforme brute est un procédé dans lequel de fines particules de verre sont déposées sur la préforme brute.

3. Procédé de fabrication d'une préforme de fibre optique selon la revendication 1, dans lequel le diamètre de la préforme brute est de plus de 1,0 fois et inférieur ou égal à 1,3 fois le diamètre du plaquage, et l'étape de fabrication d'une préforme de fibre optique à partir de la préforme brute est un procédé dans lequel le diamètre de la préforme brute est réduit en éliminant sa portion périphérique radiale.

4. Procédé de fabrication d'une préforme de fibre optique selon l'une quelconque des revendications 1 à 3, dans lequel la préforme de fibre optique a un diamètre supérieur ou égal à 110 mm, et une longueur supérieure ou égale à 1 500 mm.

5. Procédé de fabrication d'une préforme de fibre optique selon l'une quelconque des revendications 1 à 4, dans lequel la préforme de fibre optique a une masse supérieure ou égale à 50 kg.

6. Procédé de fabrication d'une préforme de fibre optique selon l'une quelconque des revendications 1 à 5, dans lequel le premier corps de dépôt de suie de verre est formé en déposant de fines particules de verre dans une direction axiale de celui-ci, et le corps de dépôt de suie de verre (8) est formé en déposant de fines particules de verre par la méthode de dépôt extérieur en phase vapeur ou la méthode de dépôt multicouche multibrûleur.
